# EUROPEAN PATENT SPECIFICATION

(11) **EP 2 269 462 B1**
(45) Date of publication and mention of the grant of the patent: **24.12.2014**
(21) Application number: 09724733.2
(22) Date of filing: 24.03.2009
(51) Int. Cl.: A01N 65/06, A01P 13/00

(54) **HERBICIDE COMPOSITION AND WEED CONTROL METHOD**
HERBIZIDZUSAMMENSETZUNG UND UNKRAUTBEKÄMPFUNGSVERFAHREN
COMPOSITION HERBICIDE ET PROCÉDÉ DE LUTTE CONTRE LES MAUVAISES HERBES

(30) Priority: 25.03.2008 JP 2008077249; 19.08.2008 JP 2008210640
(43) Date of publication of application: 05.01.2011
(73) Proprietor: SDS Biotech K. K., Tokyo 103-0004 (JP)
(72) Inventor: SEKINO, Keisuke, Tsukuba-shi Ibaraki 300-2646 (JP); TANAKA, Keijitsu, Tsukuba-shi Ibaraki 300-2646 (JP); KANEYASU, Yousuke, Tsukuba-shi Ibaraki 300-2646 (JP); SATO, Daisuke, Ibaraki 300-3657 (JP)
(74) Representative: Strehl, Peter
(86) International application number: PCT/JP2009/055802
(87) International publication number: WO 2009/119569

(56) References cited:
- JP-A- 5 213 711
- JP-A- 11 243 870
- JP-A- 2005 087 614
- JP-A- 2008 001 629
- JP-A- 2008 050 329
- US-A- 5 200 429
- Forestry Department: "Non-wood forest products from conifers", 31 December 1998 (1998-12-31), FAO, XP002692725, page Chapter 7, * "Essential oils from Juniperus and Cupressus"; "Essential oils from Cedrus" *
- NUNEZ ET AL: "Sesquiterpenes from the wood of Juniperus lucayana", PHYTOCHEMISTRY, PERGAMON PRESS, GB, vol. 68, no. 19, 21 September 2007 (2007-09-21), pages 2409-2414, XP022264109, ISSN: 0031-9422, DOI: 10.1016/J.PHYTOCHEM.2007.05.030

## Description

### TECHNICAL FIELD

The present invention relates to a weed control method.

### BACKGROUND ART

Though various herbicides have been developed and used to date, there is a wide variety of weeds as a controlled object (i.e. target weeds) and weeds grow for a long period of time and therefore there is no commercially available herbicide at present which satisfies all the requirements in terms of the efficacy, herbicidal spectrum, human safety and impact on the environment.

At present there is a demand for a herbicide exerting excellent actions in terms of herbicidal activity, herbicidal spectrum, residual efficacy and quick-acting property in the management of green spaces such as parks, yards, residential lands, parking lots, athletic fields, roads and embankments. In addition, use of natural pesticides has been demanded owing to rising concern for the environmental destruction and human safety problem and growing demands for natural materials.

An extract of cedars has been known as one of such natural pesticides. Examples of the cedar extract includes a deodorant disclosed by JP-A-2005-87614 (Patent Document 1), a horticultural antibacterial agent disclosed by JP-A-2004-217576 (Patent Document 2), a miticide disclosed by Patent Publication No. 3064591 (Patent Document 3) and a cockroach repellent reported in "Hideto FUJIMOTO et al., Summary of the 56th Congress of the Japan Weed Research Society, p.72 (P09-1430)" (Non-patent Document 1). However, these publications have no disclosure of herbicidal activity.

On the other hand, regarding the effect in the inhibition of the plant growth, for example, germination inhibitory effect on Komatsuna (Brassica compestis) is reported in "Ryuji YOSHITOME et al., 2003 Annual Report 6, Ehime Prefectural Institute of Public Health and Environmental Science, pp. 55-63" (Non-patent Document 2). However, it only teaches using the bark of a cedar as it is or a water-soluble component and has no disclosure of the herbicidal activity of the oily extract used in the present invention. Besides, the germination inhibitory effect of Japanese cedar essential oil on radish reported in "Mitsuyoshi YATAGAI et al., Journal of the Japan Wood Research Society, pp. 345-351" (Non-patent Document 3) has only a germination retarding effect which is lost instantaneously, wherein the herbicidal activation property of the present invention cannot be found.

A herbicide using an extract derived from branches and leaves of pine, Japanese cypress and cedar trees is reported in JP-A-2008-50329 (Patent Document 4). Also, a weed control method using an extract of alkaline aqueous solution derived from leaves of Cupressaceae is disclosed in JP-A-2008-1629 (Patent Document 5). U.S. Patent 5,998,335 discloses the use of an essential oil such as pine oil, tea tree oil and eucalyptus oil for a herbicidal composition. However, an essential oil (oily substance) derived from a specific plant or branches and leaves have been used in these prior art documents and the use of an extract derived from a lumber has not been sufficiently studied.

It has been widely practiced to lay lumber processed products in the form of chips, fiber or powder on the nonagricultural land for the purpose of weed suppression. However, a large amount of lumber processed products is required for such a method and the weed suppressive effect has not been necessarily sufficient.

Patent Document 1: JP-A-2005-87614
Patent Document 2: JP-A-2004-217576
Patent Document 3: Japanese Patent publication No. 3064591
Non-patent Document 1:
Non-patent Document 2:
Non-patent Document 3:
Patent Document 4: JP-A-2008-50329
Patent Document 5: JP-A-2008-1629
Patent Document 6: U.S. Patent publication No. 5,998,335

### Problems to be Solved by the Invention

In consideration of such circumstances and the current situation in the management of green spaces, an object of the present invention is to provide a weed control method effectively using a natural extract solution derived from lumbers which enables controlling the target weed for a long term with a rapid-acting effect and low environmental impact.

### Means to Solve the Problem

As a result of intensive studies on natural ingredients which may be available as a herbicide, the present inventors have found that an oily extract obtained from a lumber of trees belonging to Pinales is highly effective in eradicating weeds against a variety of weeds as a herbicide for managing nonagricultural green spaces such as parks, yards, residential lands, parking lots, athletic fields, roads and embankments in any of the treatment methods of a soil application, a soil incorpoted application and a foliar application; has a rapid-acting and long-term residual effect with a single application; is a natural medical agent having a herbicidal effect which is comparable to that of chemical pesticides; and enables obtaining high herbicidal effectiveness surpassing that of the conventionally-known essential oil such as pine oil, tea tree oil and eucalyptus oil. The present inventors have accomplished the present invention based on this finding.

That is, the present invention relates to the weed controlling method as described below.
[1] A weed control method, comprising application of an oily extract obtained by cooling the steam generated during a drying step of a lumber of trees belonging to the order Pinales to a target weeds.
[2] The weed control method as described in [1] above, wherein the trees belonging the order Pinales are the trees belonging to the family Cupressaceae or family Pinaceae.
[3] The weed control method as described in [1] above, wherein the trees belonging the order Pinales are the trees belonging to the genus Cryptomeria, Thuja, Thujopsis, Chamaecyparis, Cupressus or Juniperus belonging to the family Cupressaceae; or to the genus Picea, Tsuga, Cedrus, Pseudotsuga, Larix, Pinus or Abies belonging to the family Pinaceae.
[4] The weed control method as described in [1] above, wherein the trees belonging to the order Pinales is Cryptomeria japonica in the genus Cryptomeria in the family Cupressaceae.
[5] The weed control method as described in [1] above, wherein a liquid formulation or spray solution containing an oily extract as an active ingredient in an amount of 1 to 100% is used by application to the foliar parts or roots of the target weeds, incorporation of the formulation or stock solution into the soil in pre-emergence of the target weeds and/or application to the soil surface in pre-emergence of the target weeds for the target weed control.
[6] The weed control method as described in [5] above, wherein the oily extract of the active ingredient is a cedar essential oil obtained by cooling the steam generated during a drying step of the cedar wood.

### EFFECTS OF THE INVENTION

The herbicidal composition used in the present invention has a broad herbicidal spectrum against plants incluing monocot plants, dicot plants, perennial plants and annual plants. The herbicidal composition has both of a foliar application activity and a soil (soil incorporated) application activity as well, and can control target weed species accurately, immediately and over a long term. Therefore, the labor or cost required for the spraying of the herbicide can be largely reduced. Further, a steam generated in a drying step of a lumber of trees belonging to the order Pinales, wood chips, sawdust or wood powder produced during the processing of the lumber is usually discarded and therefore the herbicidal composition enables recycling of waste materials as well. In addition, the herbicidal composition is a natural pesticide, and therefore enables reducing the negative environmental impact. As discussed above, the herbicidal composition used in the present invention has many excellent characteristics and is highly practical.

### BEST EMBODIMENT TO CARRY OUT THE INVENTION

The term "%" described below in the present specification to show a blending amount is used to mean "mass %".

The weed to be a controlled object, i.e. target weed in the present invention includes:
- grass weed, broad-leaved weed;
- monocot or dicot weed;
- weeds having a different life cycle such as annual, biennial or perennial;
- weeds having different breeding systems such as seeds, rhizomes, tubers and bulbs;
- weeds easy to control and weeds difficult to control;
- weeds acquired resistance against a specific herbicide;
- plants which have been treated as weed for historical or economical reasons;
- plants which have turned to be harmful weeds due to the elimination of antagonistic plant species as a result of competition between plant species and selection pressure owing to artificial development and environmental destruction; and
- weeds in different life stages such as pre-emergence, early stage of germination, early stage of growth, peak growth stage, fruitful stage and decline stage even if they are in the identical species.

A wide range of species are included in the target weeds.

Generally, the widely used method to control the weeds under diverse environments as mentioned above is a method of using a herbicide combining several kinds of chemical herbicidal components having different mode of actions or a method of performing symptomatic treatment by successive application of herbicide.

However, since heavy use of chemical herbicides becomes a great negative impact on the environment from the aspect of degredation property and the like, it tends to be avoided because of concerns about the environmental destruction and from the human safety viewpoint.

Meanwhile, various herbicides made of natural ingredients have been proposed as a herbicide having a small impact on the environment, but all of them have had problems that their effects are insufficient, that they are limited in the weed species and in the timing of the treatment, and that they do not have much residual effect; and therefore it can hardly be said that they are highly practical.

The herbicidal composition used in the present invention has succeeded in solving the above-mentioned problems even though they are natural pesticides, and there have been no documents referring to such excellent herbicidal effects, herbicidal spectrum and treatment timing by an oily extract obtained from a lumber of trees.

As a herbicide for managing green spaces, the herbicidal composition exhibits high herbicidal activity in any of the treatment methods of a soil application, a soil incorporated application and a foliar application on various target weeds such as weeds belonging to the family Solanaceae represented by Solanum nigrum, Datura stramonium and the like; weeds belonging to the family Malvaceae represented by Abutilon theophrasti, Sida spinosa and the like; weeds belonging to the family Convolvulaceae represented by Ipomoea spps. such as Ipomoea purpurea and Calystegia spps. and the like; weeds belonging to the family Amaranthaceae represented by Amaranthus lividus, Amaranthus retroflexus and the like; weeds belonging to the family Compositae represented by Xanthium pensylvanicum, Ambrosia artemisiaefolia, Helianthus annuus, Galinsoga ciliate, Cirsium arvense, Senecio vulgaris, Erigeron annuus and the like; weeds belonging to the family Cruciferae represented by Rorippa indica, Sinapis arvensis, Capsella bursapastoris and the like; weeds belonging to the family Polygonaceae represented by Polygonum blumei, Polygonum convolvulus and the like; weeds belonging to the family Portulacaceae represented by Portulaca oleracea and the like; weeds belonging to the family Chenopodiaceae represented by Chenopodium album, Chenopodium ficifolium, Kochia scoparia and the like; weeds belonging to the family Caryophyllaceae represented by Stellaria media and the like; weeds belonging to the family Scrophulariaceae represented by Veronica persica) and the like; weeds belonging to the family Commelinaceae represented by Commelina communis and the like; weeds belonging to the family Labiatae represented by Lamium amplexicaule, Lamium purpureum) and the like; weeds belonging to the family Euphorbiaceae represented by Euphorbia supina, Euphorbia maculata and the like; weeds belonging to the family Rubiaceae represented by Galium spurium, Rubia akane) and the like; weeds belonging to the family Violaceae represented by Viola mandshurica and the like; broad-leaf weeds belonging to the family Leguminosae represented by Sesbania exaltata, Cassia obtusifolia and the like; weeds belonging to the family Gramineae represented by Sorghum bicolor, Panicum dichotomiflorum, Sorghum halepense, Echinochloa crus-galli var. crusgalli, Echinochloa crus-galli var. praticola, Echinochloa utilis, Digitaria adscendens, Avena fatua, Eleusine indica, Setaria viridis, Alopecurus aegualis, Poa annua and the like; weeds belonging to the family Cyperaceae represented by Cyperus rotundus, Cyperus esculentus and the like.

Furthermore, the herbicidal composition used in the present invention is capable of eradicating a wide variety of target weeds growing in the stubble field, fallow field, orchard, meadow, lawn, trackside vacancy, idle tree farm, farm road, ridge and other nonagricultural land.

The "lumber of a tree" in the present invention indicates the trunk portion of a tree excluding branches, leaves and roots which is generally used for a building material and a pulp material; or wood chips, sawdust or wood powder generated during a production step of a building material. That is, the lumer of a tree means a trunk portion including barks and a trunk portion without barks, and furthermore square timbers, boxed hearts, boards, log timbers, round bars, laminas for plywood, laminas for LVL, wood fibers, a portion processed into wood chips and the like; or wood chips, sawdust or wood powder generated during a production step of a building material. By incorporating a drying step of a lumber of trees and a cooling step of the steam disclosed by the present invention into a production step of a building material, an oily extract which is available as a herbicide composition can be produced simultaneously with a building material. The present invention also enables producing an oily extract which is available as a herbicide composition by subjecting wood chips, sawdust or wood powder generated during the production step of such a builling material to the hot water extract or steam distillation, and therefore has a great deal of value in the industry. Or an oily extract which is available as a herbicide composition can also be produced by purposely producing wood chips, sawdust or wood powder for obtaining the oily extract used in the present invention and subjecting these to the treatment of hot water extract or steam distillation.

An oily extract obtained from a lumber of trees belonging to the order Pinales used in the present invention, specifically, an oily extract obtained by cooling the steam generated during a drying step of a lumber of trees belonging to the order Pinales or by subjecting wood chips, sawdust or wood powder derived from a lumber of trees belonging to the order Pinales to hot water extract and steam distillation can attain an excellent herbicidal effect in both cases where the oily extract is used in the treatment as an undiluted solution or as a diluted solution having a broad range of dilution ratio with water. Generally, the content of the oily extract is 1 to 100%, more preferably 10 to 100% to an applicable liquid formulation or spray solution.

Among the trees belonging to the order Pinales, those suitable for obtaining the oily extract as a herbicidal composition used in the present invention are the trees belonging to the family Cupressaceae or family Pinaceae.

Among the trees belonging to the family Cupressaceae, those suitable for obtaining the oily extract as a herbicidal composition used in the present invention include the trees belonging to any one of the genera selected from the genus Cryptomeria, Thuja, Thujopsis, Chamaecyparis, Cupressus, Juniperus, Picea, Tsuga, Cedrus, Pseudotsuga, Larix, Pinus or Abies. Specific examples of such trees include C. japonica belonging to the genus Cryptomeria; T. plicata, T. standishii, T. orientalis L., T. sutchuenensis Franch., T. koraiensis Nakai, T. occidentalis and the like belonging to the genus Thuja; T. dolabrata, T. dolabrata var. hondae and the like belonging to the genus Thujopsis; C. obtuse, C. nootkatensis, C. nootkatensis Spach, C. pisifera, C. thyoides, C. formosensis, C. lawsoniana and the like belonging to the genus Chamaecyparis; C. macrocarpa, C. glabra, C. cashmeriana, C. sempervirens, C. torulosa, C. funebris and the like belonging to the genus Cupressus; J. chinensis, J. communis, J. virginiana, J. scopulorum, J. rigida, J. oxycedrus, J. conferta, J. sabina, J. taxifolia, J. mexicana, J. funebris, J. ashei, J. macrocarpa, J. erythrocarpa and the like belonging to the genus Juniperus; and variant species thereof.

Among the trees belonging to the family Pinaceae, those suitable for obtaining the oily extract as a herbicidal composition used in the present invention are the trees belonging to any one of genera selected from the genus Picea, Tsuga, Cedrus, Pseudotsuga, Larix, Pinus or Abies.

As specific examples of such trees, those belonging to the genus Picea include P. shirasawae, P. alcokiana, P. bicolor, P. abies, P. asperata, P. meyeri, P. koraiensis, P. koyamae, P. orientalis, P. morrisonicola, P. wilsonii, P. obovata, P. schrenkiana, P. smithiana, P. alpestris, P. maximowiczii, P. torano, P. neoveitchii, P. martinezii, P. chihuahuana, P. breweriana, P. brachytyla, P. farreri, P. omorika, P. mariana, P. rubens, P. glehnii, P. purpurea, P. balfouriana, P. likiangensis, P. spinulosa, P. glauca, P. engelmannii, P. sitchensis, P. jezoensis, P. pungens and variant species thereof.

The trees belonging to the genus Tsuga include T. sieboldii, T. diversifolia, T. brunonianum, T. chinensis, T. Canadensis, T. heterophylla, T. mertensiana, T. caroliniana; and those belonging to the genus Cedrus include C. deodara, C. libani and C. atlantica; the trees belonging to the genus Pseudotsuga include P. japonica and P. menziesii; those belonging to the genus Larix include L. decidua, L. europaea, L. sibirica, L. gmelinii, L. olgensis, L. dahurica, L. kaempferi, L. leptolepis, L. principis, L. kongboensis, L. mastersiana, L. potaninii, L. speciosa, L. griffithii, L. griffithiana, L. himalaica, L. laricina, L. lyallii and L. occidentalis; and variant species thereof.

The trees belonging to the genus Pinus include P. amamiana, P. armandii, P. ayacahuite, P. bhutanica, P. chiapensis, P. dabeshanensis, P. dalatensis, P. fenzeliana, P. flexilis, P. reflexa, P. lambertiana, P. morrisonicola, P. monticola, P. parviflora, P. peuce, P. pumila, P. strobiformis, P. strobus, P. wallichiana, P. wangii, P. albicaulis, P. cembra, P. koraiensis, P. sibirica, P. nelsonii, P. krempfii, P. bungeana, P. gerardiana, P. squamata, P. maximartinezii, P. pinceana, P. rzedowskii, P. cembroides, P. culminicola, P. discolor, P. edulis, P. johannis, P. monophylla, P. orizabensis, P. quadrifolia, P. remota, P. aristata, P. balfouriana, P. longaeva, P. densiflora, P. heldreichii, P. hwangshanensis, P. kesiya, P. luchuensis, P. massoniana, P. mugo, P. nigra, P. resinosa, P. sylvestris, P. tabuliformis, P. taiwanensis, P. thunbergii, P. tropicalis, P. yunnanensis, P. pinea, P. brutia, P. canariensis, P. halepensis, P. latteri, P. merkusii, P. pinaster, P. roxburghii, P. leiophylla, P. lumholtzii, P. caribaea, P. clausa, P. cubensis, P. echinata, P. elliottii, P. glabra, P. hondurensis, P. occidentalis, P. palustris, P. pungens, P. rigida, P. serotina, P. taeda, P. virginiana, P. banksiana, P. contorta, P. attenuate, P. greggii, P. herrerae, P. jaliscana, P. lawsonii, P. muricata, P. oocarpa, P. patula, P. praetermissa, P. pringlei, P. radiate, P. tecunumanii, P. teocote, P. apulcensis, P. arizonica, P. cooperi, P. coulteri, P. devoniana, P. durangensis, P. engelmanii, P. estevezii, P. gordoniana, P. hartwegii, P. jeffreyi, P. maximinoi, P. montezumae, P. ponderosa, P. pseudostrobus, P. sabiniana, P. torreyana and variant species thereof.

The trees belonging to the genus Abies include A. fraseri, A. balsamea, A. bifolia, A. lasiocarpa, A. sibirica, A. sachalinensis, A. koreana, A. nephrolepis, A. veitchii, A. veitchii var. sikokiana, A. grandis, A. concolor, A. durangensis, A. flinckii, A. guatemalensis, A. nebrodensis, A. alba, A. borisii-regis, A. cephalonica, A. nordmanniana, A. nordmanniana, A. cilicica, A. pinsapo, A. pinsapo var. marocana, A. numidica, A. kawakamii, A. homolepis, A. recurvata, A. firma, A. beshanzuensis, A. holophylla, A. chensiensis, A. chensiensis subsp. Salouenensis, A. pindrow, A. ziyuanensis, A. amabilis, A. mariesii, A. delavayi, A. fabric, A. forrestii, A. chengii, A. densa, A. spectabilis, A. fargesii, A. fanjingshanensis, A. yuanbaoshanensis, A. squamata, A. religiosa, A. vejarii, A. vejarii var. Mexicana, A. hickelii, A. hickelii var. oaxacana, A. procera, A. magnifica, A. magnifica var. shastensis and A. bracteata.

The other examples of the trees belonging to the family Cupressaceae suitable for obtaining an oily extract as a herbicidal composition used in the present invention include those such as C. lanceolata belonging to the genus Cunninghamia; those belonging to the genus Athrotaxis; those belonging to the genus Taiwania; those such as S. sempervirens belonging to the genus Sequoia, those such as S. giganteum belonging to the genus Sequoiadendron; those such as M. glyptostroboides belonging to the genus Metasequoia; those such as T. distichum belonging to the genus Taxodium; those belonging to the genus Glyptostrobus; those such as C. baileyi, C. canescens, C. columellaris, C. drummondii, C. endlicheri, C. monticola, C. muelleri, C. neocaledonica, C. oblonga, C. preissii, C. rhomboidea, C. sulcata, C. verrucosa, C. macleayana belonging to the genus Callitris; those such as A. acuminatus, A. arenarius, A. pyramidalis belonging to the genus Actinostrobus; those belonging to the genus Neocallitropsis such as N. pancheri, those belonging to the genus Widdringtonia such as W. cedarbergensis, W. nodiflora, W. schwarzii and W. whytei; those belonging to the genus Diselma such as D. archeri; those belonging to the genus Fitzroya such as F. cupressoides; those belonging to the genus Austrocedrus such as A. chilensis; those belonging to the genus Libocedrus such as L. austrocaledonica, L. bidwillii, L. chevalieri, L. plumose and L. yateensis; those belonging to the genus Pilgerodendron such as P. uviferum; those belonging to the genus Papuacedrus such as P. papuana; those belonging to the genus Fokienia such as F. hodginsii; those belonging to the genus Calocedrus such as C. decurrens, C. formosana and C. macrolepis; those belonging to the genus Tetraclinis such as T. articulate; those belonging to the genus Microbiota such as M. decussate; those belonging to the genus Platycladus such as P. orientalis; those belonging to the genus Callitropsis such as C. nootkatensis, C. vietnamensis, C. decurrens and C. formosana. The variant species thereof are useful as well.

The other examples of the trees belonging to the family Pinaceae suitable for obtaining an oily extract as a herbicidal composition used in the present invention include those belonging to Keteleeria such as K. davidiana, K. formosana and K. fortunei; and those belonging to the genus Cathaya. The variant species thereof are useful as well.

As an oily extract as the herbicidal composition used in the present invention, the extract derived from the above-mentioned trees can be used singly or in combination of two or more thereof.

The oily extract used in the present invention can be obtained by cooling the steam obtained during the kiln-drying step of a lumber of trees belonging to the order Pinales. The suitable heating temperature in such a drying step is 60 to 240°C, preferably 80 to 150°C, more preferably 90 to 120°C as a temperature of the heated lumber of the trees. Since the temperature range for drying lumbers is generally from 40 to 90°C in the wood working industry, the drying temperature in the present invention is somewhat special. However, it is critical to carry out drying within the above-mentioned temperature range and to capture the steam generated during the drying to obtain an oily extract useful for a herbicidal composition used in the present invention. Generally, such steam is obtained in the early and middle stages of the lumber drying step. Such a drying step can be performed as part of the drying schedule to reduce the water content of square timbers, boxed hearts, boards, log timbers, round bars, laminas for plywood, laminas for LVL, wood fibers or wood chips.

It is also quite useful to perform such a drying step as part of the drying schedule in high-temperature drying for the purpose of enhancing antiseptic property and size stability of square logs, boxed hearts, log timbers and round bards, a herbicide made of natural ingredients have been proposed as a herbicide having a small impact on the environment can be produced simultaneously with the production of high-grade seasoned timber so-called ThermoWood and the like. A specific example of the drying schedule in such high-temperature drying comprises a first step of elevating the lumber temperature to 90 to 100°C within a short time of four hours or less, a second step of gradually elevating the lumber temperature to around 120°C over subsequent several to about 30 hours and a third step of gradually elevating the lumber temperature to around 200°C to thereby treat the lumber with heat. The steam generated in the latter half of the first step and in the second step can be suitably used for obtaining the oily extract used in the present invention.

The drying time in such a drying step is to be appropriately adjusted depending on the lumber size and the heating apparatus capacity. It is desirable to maintain a temperature within the above-mentioned range for at least five minutes in the case of laminas and wood chips having a thickness of 10 mm or less and for at least 15 minutes in the case of timbers having a thickness of 5 cm or more after the temperature at the center part of the timber reaches the above-mentioned temperature. Examples of the drying method to effectively perform such drying steps include steam-heated dry, indirect furnace-type dry, direct-fired dry, electro-heat dry, solar dry, press dry, infrared dry, high-frequency dielectric dry and vacuum dry. Though steam-heated dry is particulary suitable for use, the other drying method or a combination of the above-mentioned drying methods can also be used as long as the method is capable of performing the heating within the above-mentioned temperature range. Examples of the combination of the drying methods include the combination of steam-heated dry and high-frequency dielectric dry and a combination of high-frequency dielectric dry and vacuum dry. In the case of vacuum dry, it is necessary to heat the lumber to 40°C or more, preferably 60°C or more and to reduce the pressure to 1.32 x 10⁴ Pa (100 mmHg) or less as a degree of vacuum.

The drying equipment that is actually used is a dry kiln having the above-mentioned drying equipment. The condensed water containing a herbicidal composition used in the present invention can be collected by cooling the steam exhausted from the dry kiln to the outside by a method of the heat exchange with a refrigerant such as water and/or air or a method of incorporating the steam into water. Such cooling is generally performed at a temperature of 100°C or lower, preferably 80°C or lower. By allowing the obtained condensed water to stand, an oily extract can be obtained as an oil layer on the liquid surface. Such an oily extract can be isolated by collecting the oil layer or by being broght into contact with an oil recovery product, oil absorption product or oil adsorbing product in the form of fiber, nonwoven cloth, fabric, sheet, mat, particle, column and the like. Such an oil recovery product and the like is also useful for the purpose of collecting an oily extract dispersed in the water lalyer of the condensed water in a small amount. The dry kiln to be used is provided with a steam supply pipe in some cases to increase humidity in the early stage of drying generally for preventing the season cracks of the lumber, and a part of such steam is also collected as a condensed water containing a herbicidal composition used in the present invention.

Components having high water solubility among the volatile components derived from a lumber are dissolved in the water layer comprising a majority of the condensed water. Such components are not essential in the present invention since they have a small herbicidal effect against target weeds. However, the components may be used in mixture in the herbicidal composition used in the present invention from the viewpoint of effective use of resources. Various components to be transferred to the water layer of the condensed water are to be obtained from the branch and leaf portion of a tree. Though it is essential to obtain an oily extract using not a branch and leaf portion but a lumber for the object of the present invention, a water layer of the condensed water containing various components can be obtained by drying branches and leaves concurrently with drying a lumber from the viewpoint of effective use of the thermal energy and resources. It is reasonable to provide an aqueous solution of such a water layer and components thereof for other industrial uses.

The oily extract used in the present invention can also be obtained by subjecting wood chips, sawdust or wood powder derived from the lumber of trees belonging to the order Pinales to hot water extract or steam distillation. The heating temperature in such hot water extract or steam distillation is generally from 40 to 120°C, preferably 50 to 100°C. The time required for extraction can be appropriately adjusted depending on the size of wood chips, sawdust or wood powder to be used and the extracting operation is generally carried out within a range from one hour to 24 hours. Applying pressure within a pressure range less than 40 atm in such processes enables treatment at a higher temperature within a range from 120 to 240°C, which enables obtaining a larger amount of the oily extract. The extract using carbon dioxide under subcritical conditions or supercritical conditions may also be available.

Though the oily extract used in the present invention contains various substances because it is an extract of natural ingredients, it is characterized by containing sesquiterpene, sesquitelpene alcohol, diterpene and diterpene alcohol in a total amount of 50% or more, preferably 60% or more. More preferably, the oily extract used in the present invention comprises a compound which belongs to a group consisting of himachalene, cadinene, cadinol, muurolene, elemol, eudesmol, cedrene, cedrol and thujopsene belonging to sesquiterpene and sesquiterpene alcohol; and 16-kaurene belonging to diterpene as a main component and contains the total content of these ten components of 40% or more, preferably 50% or more. There are various isomers of these compounds and, for example, there exist α-cadinene, β-cadinen, γ-cadinene and δ-cadinene as isomers in the case of cadinene. Accordingly, the content of the above-mentioned components indicate the total amount of these isomers.

As discussed above, the oily extract used in the present invention contains a large amount of components belonging to sesquiterpene, sesquiterpene alcohol, dipertene or diterepene alcohol and is completely different from the conventionally known essential oil such as pine oil, pine needle oil, tea tree oil and eucalyptus oil mainly comprising monoterpene such as pinene, terpinene, limonene, sabinene, myrcene, cineol and camphene in terms of properties and herbicidal effects. That is, an essential oil obtained from a plant belonging to the family of Rosaceae, Lamiaceae, Orsaceae, Asteraceae, Myrtaceae, Apiaceae, Annonaceae, Iridaceae, Burseraceae, Caryophyllaceae, Zingiberaceae, Oleaceae, Lauraceae, Poaceae, Magnoliaceae, Violaceae or Leguminosae which does not belong to the order Pinales; or an essential oil obtained from branches and leaves of a tree, even if the tree belongs to the family Pinales, has a low content of components belonging to sesquipertene, sesquipertene alcohol, dipertene or dipertene alcohol, which leads to an unsatisfactory herbicidal effect; and therefore the essential oils require spray treatment in a high concentratin and in several bathces to attain the herbicidal effect. On the other hand, the oily extract used in the present invention exhibits excellent herbicidal effect against a various weeds and has a long-term weed controlling effect by treating the soil surface simultaneously and therefore can be a highly effective herbidical composition. As discussed above, it is clear that the oily extract used in the present invention and uses therof are different from those of the conventionally known essential oils.

Also, the oily extract used in the present invention may be further subjected to the operation such as distillation, fractional distillation, column fractionation and solvent extraction to thereby isolate, condense or purify the components thereof to be used as a herbicidal composition.

The herbicidal composition containing the oily extract used in the present invention is used by the application to the foliar parts or roots of the target weed, incorporation of the composition into the soil in pre-emergence of the target weeds and/or application to the soil surface in pre-emergence of the target weeds.

Examples of the specific application methods include spray treatment of the foliar parts or the soil in the vicinity of the roots of the target weeds; painting application to the foliar parts of the target weeds; drop treatment of the foliar parts or to the soil in the vicinity of the roots of the target weeds; incorporation or injection into the soil where the control of the the target weed growth is desired; and spray or drop treatment of the soil surface where the control of the target weed growth is desired. With respect to the target weed control treatment, the oily extract used in the present invention may be directly applied but generally it is desirable to be used by preparing an applicable liquid formulation or spray solution containing the oily extract in an amount of 1 to 100%, more preferably 10 to 100% as mentioned above. The method to use the above mentioned oily extract, preparation solution or dilution thereof supported on a solid carrier to be applied is also useful as a target weed control method.

The concentration of the oily extract used in the present invention as an effective ingredient is about 1 to 90%, preferably about 10 to 85% when it is used in the form of liquid. The oily extract is sprayed as it is as an applicable liquid (AL) formulation or may be diluted with water to be used for the spray, drop or painting application. In the case where a diluted oily extract is sprayed or delivered by drops, the oily extract is generally diluted with water of 10 to 1000 ml, preferably 50 to 400 ml per 1 m².

When such a solution is used for painting application for the foliar parts of the target weeds, the solution is used for painting generally in an amount of 5 to 500 ml, preferably 10 to 200 ml per 1 m² of the surface area of the foliar parts.

When such a solution is used for drop treatment of the foliar parts or root region of the target weeds or for drop treatment of the soil where the control of the target weed growth is desired, the amount of the solution delivered by drops is to be appropriately adjusted depending on the number or frequency of instillations. When such a solution is used for the soil incorporated treatment or injection treatment in the soil where the control of the target weed growth is desired, the amount of the solution used should be appropriately adjusted depending on the depth of the soil to be treated and the term of the target weed control. Generally, the solution is used in an amount of 10 to 5000 ml, preferably 50 to 1000 ml as a solution amount per 1 m² of the surface area of the soil to be treated.

By using a solid carrier after making the oily extract, preparation solution or diluent used in the present invention supported thereon, they can be used in the form of a solid (solid formulation). A suitable percentage of the effective ingredient (the oily extract used in the present invention) in such a solid formulation is about 10 to 90%, preferably about 20 to 80% to 100% of the total mass of the solid formulation. Such a solid formulation is to be spread in an amount of 0.1 g to 10 kg, preferably 0.125 g to 5 kg, more preferably 0.625 g to 1 kg per 1 m². Such a solid formulation may be used by being laid on the soil surface or incorporated in the soil. Particularly, the method of laying a solid preparation on the soil surface in layers is effective to attain a long-term effect on the target weed control.

Among the target weed control methods described above, the method to be adopted can be appropriately selected depending on state of the weed to be controlled and the soil, the state of the surrounding environment and presence or absence and kind of available spraying equipment. Also, the blend ratio of the oily extract used in the present invention in the herbicidal composition is to be appropriately selected depending on the presence or absence of the dilution at the spraying, the dilution rate, plant density of the target weeds, a required term for the weed control and the like.

Suitable examples of a solid support which can be used to obtain the above-mentioned solid formulation include an inorganic carrier such as talc, clay, bentonite, kaolinite, pyrophyllite, acid clay, diatom earth, white carbon, vermiculite, apatite, gypsum, mica, silica sand, calcium carbonate, pumicite, perlite, crushued ceramics, crushed bricks, crushed concrete, cruched stone, powdered ore and calcined clay; a plant-based carrier such as crystalline cellulose, starch, wood chips, crushed cork, sawdust, wood powder, chaff, paper slip and plant-based fiber; and a polymer compound such as polyvinyl chloride and petroleum resin. Such a solid carrier can be used singly or in combination of two or more thereof.

It is possible to use the herbicidal composition used in the present invention being added with a liquid carrier which is used widely for pesticide formulations. Examples of a liquid carrier which can be used for such a purpose include alcohols such as methanol, ethanol, cyclohexanol, amyl alcohol, ethylene glycol, isopropyl alcohol; aromatic hydrocarbons such as benzene, toluene, xylene and methylnaphthalene; halogenated hydrocarbons such as chlorobenzene and trichloroethylene; ethers such as ethyl cellosolve, butyl cellosolve and dioxane; esters such as isopropyl acetate, and benzyl acetate; polar solvents such as dimethyl sulfoxide; kerosene; mineral oil; and water. Such a liquid carrier can be used singly or in combination of two or more thereof.

Furthermore, the herbicidal composition used in the present invention can be made into forms which a commonly-used pesticide can take: i.e. various forms such as an emulsion, a suspension, a flowable formulation, a pellet, wettable powder, a granule formulation, a dust formulation, water dispersible granule and a microcapsule containing polymer by blending a surfactant, dispersing agent or a co-formulant as needed.

Examples of a surfactant which can be used include alcohol sulfate ester, alkyl sulfonate, lignin sulfonate, polyoxyethylene glycol ether, polyoxyethylene alkylaryl ether and polyoxyethylene sorbitan monoalkylate.

Examples of a co-formulant which can be used include carboxy methyl cellulose, polyethylene glycol, propylene glycol, polyvinyl alcohol, gum arabic, cornstarch and a colorant.

The surfactant, dispersing agent and co-formulant may be used singly or in combination of two or more thereof, respectively. When these are used in combination of two or more thereof, the mixture ratio can also be arbitrarily selected.

It is also useful to add a component to adjust the pH to the herbicidal composition used in the present invention. Specific examples of an alkaline compound which can be used for the purpose of adjusting the pH include an amine series or ammonium series compound such as ethanol amine, diethanol amine, triethanol amine, propanol amine, triisopropanol amine, N-methylethanol amine, N-methyldiethanol amine, N,N-dimethylethanol amine, N-ethylethanol amine, N-ethyldiethanol amine, isopropanol amine, aminoethylethanol amine, ethylene diamine, diethylene triamine, triethylene tetramine, tetraethylene pentamine, pentaethylene hexamine, polyethylene imine, N,N-dimethylethylene diamine, 1,2-propane diamine, 1,3-propane diamine, polyallylamine, ammonia, ammonium carbonate and ammonium bicarbonate; a compound containing metal which belongs to group 1A in the periodic table of the elements such as NaOH, sodium bicarbonate and sodium carbonate; and a compound containing metal which belongs to group 2A in the periodic table of the elements such as Mg(OH)₂. Specific examples of an acidic compound which can be used for the purpose of adjusting the pH include organic acid such as citric acid, succinic acid, DL-malic acid, D-malic acid, L-malic acid, propionic acid, acetic acid and benzoic acid; and mineral acid such as sulfuric acid, hydrochloric acid and phosphoric acid. The adjustable range of pH is preferably from 3 to 11, more preferably from 4 to 10.

The herbicidal composition used in the present invention is capable of eradicating a wide variety of target weeds growing in the stubble field, fallow field, meadow, lawn, area surrounding trees in orchards, tree farm, area surrounding trees in a plantation, farm road, idle land, parking lots, railroad tracks, trackside vacancy, athletic fields, parks, walking trails, ridges, riverside areas, beaches and other nonagricultural land. The herbicidal composition has no adverse effect on both of the surrounding environment and useful trees and is free from generating unpleasant odors. Therefore the herbicidal composition provides a highly excellent weed control method.

It is useful to further add an inorganic component to the herbicidal composition used in the present invention before use for greater enhancement of the herbicidal effect of the present invention by a synergetic weed control effect. Examples of the inorganic component which can be used for such a purpose include a carbonic acid compound such as sodium bicarbonate, ammonium bicarbonate, sodium carbonate and ammonium carbonate; a compound containing an alkaline metal ion or alkaline earth metal ion such as calcium oxide, calcium chloride, calcium sulfate, magenasium oxide, magnesium chloride and magnesium sulfate; a boron-containing compound such as boroic acid, borax and calcium borate; sodium chlorate; and hydrate salts or calcined products of these inorganic compounds. Among these, sodium bicarbonate, sodium carbonate, calcium borate, magnesium oxide and sodium chlorate are particularly suitable to be used. In addition, as an inorganic component used in the present invention, crushed products of magnesium borate minerals and calcium borate minerals are also useful. Suitable examples of such a mineral include a magnesium borate mineral such as Camsellite, Canavesite and Congolite; a calcium borate mineral such as Calciborite, Calcybeborosillite, Charlesite, Chelkarite, Clinokurchatvite, Colemanite, Collbranite and Ulexite; and a calcined product of these minerals. An inorganic mineral having low water solubility can be used in the form of fine powder. A preferred concentration of these inorganic components is 0.01 to 500, more preferably 0.1 to 50 when the concentration of the oily extract used in the present invention contained in the item to be applied is taken to be 1. Such inorganic components may be used singly or in combination of two or more thereof.

It is useful to further add an extraction liquid and/or extracted component of the other plant to the herbicidal composition used in the present invention before use for greater enhancement of the herbicidal effect of the present invention by a synergetic weed control effect. Examples of the plant extraction liquid which can be used for such a purpose include liquid extracted from fruits, pericarps, seeds, leaves and roots of a plant including citruses, herbs, bamboos, bamboo grasses and conifers. Preferred examples of the extracted component of the other plants include d-limonene, 1-limonene and dl-limonene. The amount of these extraction liquid and extracted components of the other plants to be used may be adjusted appropriately depending on the concentration of the oily extract used in the present invention used concurrently and the herbicidal performance of the extraction liquid and/or extracted component of the other plants. For example, in the case where d-limonene is used, a preferred concentration of d-limonene is 0.01 to 100, more preferably 0.1 to 10 when the concentration of the oily extract used in the present invention contained in the item to be applied is taken to be 1. Such extraction liquid and/or extracted component of the other plants may be used singly or in combination of two or more thereof.

The herbicidal composition used in the present invention can also be used in combination with other herbicides, i.e. one or more herbicides such as a sulfonylurea-type, pyrazole-type, diphenyl ether-type, triazine-type, urea-type, amide-type or carbamate-type herbicide in order to eradicate a large variety of weeds simultaneously. Examples of such a herbicide include the following compounds.

Ioxynil, aclonifen, aziprotryne, acifluorfen-sodium, azimsulfuron, asulam, acetochlor, atrazine, anilofos, azafenidin, amicarbazone, amidosulfuron, amitrole, aminopyralid, amiprophos-methyl, ametryne, alachlor, alloxydim, isouron, isoxachlortole, isoxaflutole, isoxaben, isoproturon, imazaquin, imazapic, imazapyr, imazamethabenz-methyl, imazamox-ammonium, imazethapyr, imazosulfuron, indanofan, eglinazine-ethyl, esprocarb, ethalfluralin, ethametsulfuron-methyl, ethidimuron, ethoxysulfuron, ethoxyfen-ethyl, ethofumesate, etobenzanid, disodium endothall, oxadiazon, oxadiargyl, oxaziclomefone, oxasulfuron, oxyfluorfen, oryzalin, orthosulfamuron, orthobencarb, oleic acid, cafenstrole, carfentrazone-ethyl, karbutilate, carbetamide, quizalofop-P-ethyl, quinoclamine, quinclorac, quinmerac, cumyluron, glyphosate, glyphosate-trimesium, glufosinate-ammonium, clethodim, clodinafop-propargyl, clopyralid, clomazone, chlomethoxyfen, clomeprop, cloransulam-methyl, chloramben, chlorimuron-ethyl, DCBN, chlorphthalim, chloroxuron, chlorsulfuron, chlorthal-dimethyl, chlorotoluron, chlornitrofen, chlorbufam, chlorflurenol-methyl, chlorpropham, chlorbromuron, chloroacetic acid, cyanazine, sodium cyanate, DCMU, diethatyl-ethyl, cycloate, cycloxydim, diclosulam, cyclosulfamuron, dichlorprop, DBN, diclofop-methyl, diquat-dibromide, dithiopyr, siduron, dinitramine, cinidon-ethyl, cinosulfuron, dinoseb, dinoterb, cyhalofop-butyl, diphenamid, difenoxuron, difenzoquat, diflufenican, diflufenzopyr, dipropetryn, simazine, dimethachlor, dimethametryn, dimethenamid, simetryne, dimepiperate, dimefuron, cinmethylin, sulcotrione, sulfentrazone, sulfosulfuron, sulfometuron-methyl, sethoxydim, terbacil, terbuthylazine, terbutryne, terbumeton, dymron, dazomet, dalapon, thiazafluron, thiazopyr, thiencarbazone, tiocarbazil, thidiazimin, thifensulfuron-methyl, desmedipham, tetrapion, thenylchlor, tebutam, tebuthiuron, tepraloxydim, tefuryltrione, desmetryne, tembotrione, topramezone, tralkoxydim, triaziflam, triasulfuron, tri-allate, trietazine, triclopyr, tritosulfuron, triofensulfuron, triflusulfuron-methyl, trifluralin, trifloxysulfuron-sodium, tribenuron-methyl, Drechslera monoceras, naptalam, naproanilide, napropamidem, nicosulfuron, neburon, norflurazon, paraquat-dichloride, haloxyfop, halosafen, halosulfuron-methyl, bialaphos, picloram, picolinafen, bispyribac-sodium, pinoxaden, bifenox, piperophos, pyraclonil, pyrasulfotole, pyrazoxyfen, pyrazosulfuron-ethyl, pyrazolate, pyrazon, pyraflufen-ethyl, pyridafol, pyrithiobac-sodium, pyridate, pyriftalid, pyributicarb, pyribenzoxim, pyrimisulfan, pyriminobac-methyl, pyroxasulfone, pyroxsulam, fenuron, fenoxaprop-P-ethyl, fentrazamide, phenmedipham, fosamine-ammonium, fomesafen, foramsulfuron, butachlor, butafenacil, butamifos, butylate, butenachlor, butralin, butroxydim, flumetsulam, flazasulfuron, flamprop, primisulfuron-methyl), fluazifop, fluazolate, fluometuron, fluoroglycofen-ethyl, flucarbazone-sodium, fluchloralin, flucetosufuron, fluthiacet-methyl, flupyrsulfuron-methyl-sodium, flufenacet (fluthiamide), flufenpyr-ethyl, flupoxam, flumioxazin, flumiclorac-pentyl, fluridone, flurenol, pretilachlor, proglinazine-Et, prodiamine, prosulfuron, propaquizafop, propachlor, propazine, propanil, propyzamide, propisochlor, propham, profoxydim, profluazol, prosulfocarb, propoxycarbazone-sodium, bromacil, prometryne, prometon, bromoxynil, bromofenoxim, bromobutide, florasulam, fluroxypyr, flurochloridone, flurtamone, hexazinone, benazolin-ethyl, benefin, penoxsulam, beflubutamid, pebulate, pelargonic acid, vernolate, bencarbazone, benzfendizone, bensulide, bensulfuron-methyl, benzobicyclon, benzofenap, pethoxamid, bentazon, pentanochlor, benthiocarb, pendimethalin, pentoxazone, benfuresate, mesosulfuron-methyl, mesotrione, metazachlor, methasulfocarb, methabenzthiazuron, metamitron, metamifop, metam, MSMA (methylarsonic acid), methiozolin, methyldymron, metoxuron, metosulam, metsulfuron-methyl, methoprotryne, metobromuron, metobenzuron, metolachlor/S-metolachlor, metribuzin, mefenacet, monosulfuron, monolinuron, molinate, iodosulfuron-methyl-sodium, lactofen, linuron, rimsulfuron, lenacil, sodium chlorate, 2,3,6-TBA, 2,4,5-T, 2,4-DB, 2,4-PA, DNOC, EPTC, MCPA, MCPB, MCPP, MDBA and TCA-sodium. Such herbicides may be used singly or in combination of two or more thereof.

Furthermore, for greater enhancement of the effectiveness of the product to be applied, it is possible to combine an insecticide, fungicide, plant growth regulator, fertilizer and the like into the product.

It is also an effective method to damage the foliar parts of the target weeds by a physical method such as roller compaction, mowing with a grass cutter, spraying with a high-speed liquid sprayer and the like before, during and/or after applying the herbicidal composition used in the present invention, as a means for further enhancing the herbicidal effect. The method takes advantage of the nature of the oily extract used in the present invention of effectively penetrating inside of weeds from the damaged foliar parts of the target weeds. Accordingly, the herbicidal effect can be further improved by blending carriers to obtain a solid formulation and inorganic components for the synergetic weed control effect into the herbicidal composition used in the present invention and by using the mixture as an applicable liquid formulation or spray solution to thereby crash or deposit the solid component to the stem and leaf portion of the target weed and damage the stem and leaf portion of the target weed.

Taking advantage of such property of the herbicidal composition used in the present invention enables selectively eradicating tall weeds when tall and short weeds grow in a mixed state in the area to be applied with the herbicide by causing physical damage mainly to tall weeds. The present invention is quite distinguishing and useful in enabling selective weeding by such a simple way.

### EXAMPLES

Next, the herbicidal composition used in the present invention is described by referring to Preparation Examples, Formulation Examples and Test Examples. In the following examples, "parts" mean "parts by mass".

### Preparation Example 1:

An oily extract derived from the lumber of "sugi (Cryptomeria japonica)" (hereinafter referred to as "sugi-refined-oil") was prepared according to the method described in Patent Document 1. That is, about 100 kg of undried lumbers obtained by cutting and sawing up logs from "sugi" (Cryptomeria japonica) were dried using a steam-heated drying apparatus so that the water content is reduced to 20% or less under the condition of heating temperature of 120°C. After the start of drying, the steam containing components derived from "sugi" was collected by cold trapping to obtain about 40 kg of condensed water. The condensed water was allowed to stand and about 150 g of the oil. layer which floated to the surface of the condensed water was isolated by decantation to be used as sugi-refined oil in the following Formulation Examples and Test Examples.

### Formulation Example 1: Pellet formulation

75 parts by mass of sawdust was impregnated with 20 parts by mass of sugi-refined oil and 5 parts by mass of cornstarch was added thereto and the mixture was molded into bars to obtain a pellet formulation (cylindrical form 5 to 10 mm long having a diameter of about 2 mm).

### Formulation Example 2: Flowable (emulsion) formulation

5 parts by mass of polyvinyl alcohol, 3 parts by mass of DEMOL N (trade name; manufactured by Kao Corporation), 0.5 parts by mass of ANTIFOAM E-20 (trade name; manufactured by Kao Corporation) and 41.5 parts by mass of water were stirred and mixed. 50 parts by mass of sugi-refined oil was added thereto by dropwise to obtain a flowable (emulsion) formulation.

### Test Example 1: Pot test on the foliar application (early post-emergence treatment of weeds)

Field soil was packed in a 350 cm² plastic pot and seeds of Echinochloa utilis, Digitaria adscendens, Avena fatua, Amaranthus viridis, Chenopodium album and Ipomoea purpurea were sown and covered with soil of about 1 cm thickness. After water absorption and at 11 days after seeding, sugi-refined oil diluted with a stock solution or water, or a flowable formulation prepared according to Formulation Example 2 and diluted with a stock solution or water were sprayed uniformly in a spray volume of 200 ml per 1 m². The test was performed in a glass greenhouse at a temperature of from 18 to 30°C, and the soil was appropriately moistened from the bottom side. Three days after the application, weed control was evaluated using a visual rating scale according to the criteria shown in Table 1. The results are shown in Table 2.

**Table 1 Criteria for determining the herbicidal effect**

| Criteria | Herbicidal effect (herbicidal efficacy) |
|---|---|
| 10 | 96% or more |
| 9 | 86 to 95% |
| 8 | 76 to 85% |
| 7 | 66 to 75% |
| 6 | 56 to 65% |
| 5 | 46 to 55% |
| 4 | 36 to 45% |
| 3 | 26 to 35% |
| 2 | 16 to 25% |
| 1 | 6 to 15% |
| 0 | 5% or less |

**Table 2 Pot test on the foliar application (early post-emergence treatment of weeds)**

| Dilution ratio of the spray solution | Spray solution concentration/ application dosage | Application dosage of sugi refined oil (ml/m²) | Herbicidal activity | | | | | |
|---|---|---|---|---|---|---|---|---|
| | | | Echinochloa utilis | Digitaria adscendens | Avena fatua | Amaranthus viridis | Chenopodium album | Ipomoea purpurea |
| Stock solution or solution diluted with water | | | | | | | | |
| 100 | 1% | 2 | 5 | 3 | 2 | 3 | 3 | 2 |
| 20 | 5% | 10 | 9 | 8 | 8 | 7 | 7 | 7 |
| 10 | 10% | 20 | 10 | 10 | 10 | 10 | 10 | 10 |
| 4 | 25% | 50 | 10 | 10 | 10 | 10 | 10 | 10 |
| 2 | 50% | 100 | 10 | 10 | 10 | 10 | 10 | 10 |
| 1 | 100% (stock solution) | 200 | 10 | 10 | 10 | 10 | 10 | 10 |

| Flowable formulation or formulation diluted with water | | | | | | | | |
|---|---|---|---|---|---|---|---|---|
| 50 | 4 ml/m² | 2 | 5 | 4 | 3 | 4 | 4 | 3 |
| 10 | 20 ml/m² | 10 | 10 | 9 | 8 | 8 | 8 | 7 |
| 5 | 40 ml/m² | 20 | 10 | 10 | 10 | 10 | 10 | 10 |
| 2 | 100 ml/m² | 50 | 10 | 10 | 10 | 10 | 10 | 10 |
| 1 | 200 ml/m² | 100 | 10 | 10 | 10 | 10 | 10 | 10 |

### Test Example 2: Pot test on the soil application (preemergence treatment of weeds)

Field soil was packed in a 350 cm² plastic pot and seeds of Echinochloa utilis, Digitaria adscendens, Avena fatua, Amaranthus viridis, Chenopodium album and Ipomoea purpurea were sown and covered with soil of about 1 cm thickness. After water absorption and at the day after the seeding, sugi-refined oil diluted with a stock solution or water was sprayed uniformly to the soil surface in a spray volume of 200 ml per 1 m². Also, a pellet formulation prepared according to Formulation Example 1 was applied to the soil surface to be given in a predetermined application dosage. The test was performed in a glass greenhouse at a temperature of from 18 to 30°C, and the soil was appropriately moistened from the bottom side. The samples were evaluated by observation at day 15 according to the criteria shown in Table 1. The results are shown in Table 3.

**Table 3 Pot test on the soil application (preemergence treatment of weeds)**

| Dilution ratio of the spray solution | Spray solution concentration/ application dosage | Application dosage of sugi refined oil (ml/m²) | Herbicidal activity | | | | | |
|---|---|---|---|---|---|---|---|---|
| | | | Echinochloa utilis | Digitaria adscendens | Avena fatua | Amaranthus viridis | Chenopodium album | Ipomoea purpurea |
| Stock solution or solution diluted with water | | | | | | | | |
| 100 | 1% | 2 | 2 | 1 | 2 | 3 | 2 | 0 |
| 20 | 5% | 10 | 5 | 4 | 4 | 6 | 6 | 0 |
| 10 | 10% | 20 | 8 | 7 | 7 | 9 | 8 | 0 |
| 4 | 25% | 50 | 9 | 9 | 9 | 10 | 9 | 1 |
| 2 | 50% | 100 | 9 | 10 | 10 | 10 | 10 | 3 |
| 1 | 100% (stock solution) | 200 | 10 | 10 | 10 | 10 | 10 | 5 |

| Pellet formulation (20% of active ingredient) | | | | | | | | |
|---|---|---|---|---|---|---|---|---|
| 10 g/m² | | 2 | 1 | 1 | 1 | 2 | 1 | 0 |
| 50 g/m² | | 10 | 5 | 4 | 4 | 5 | 5 | 0 |
| 100 g/m² | | 20 | 8 | 7 | 7 | 8 | 7 | 0 |
| 250 g/m² | | 50 | 9 | 9 | 9 | 9 | 9 | 2 |
| 500 g/m² | | 100 | 9 | 10 | 10 | 9 | 9 | 4 |

### Test Example 3: Pot test on the foliar application (post-emergence treatment of weeds)

Field soil was packed in a 350 cm² plastic pot and seeds of Echinochloa utilis, Digitaria adscendens, Avena fatua, Amaranthus viridis, Chenopodium album and Ipomoea purpurea were sown and covered with soil of about 1 cm thickness. After water absorption and at day 25 after the seeding, sugi-refined oil diluted with a stock solution or water was sprayed uniformly in a spray volume of 200 ml per 1 m². The test was performed in a glass greenhouse at a temperature of from 18 to 30°C, and the soil was appropriately moistened from the bottom side. The samples were evaluated by observation at day 10 according to the criteria shown in Table 1. The results are shown in Table 4.

**Table 4 Pot test on the foliar application (post-emergence treatment of weeds)**

| Dilution ratio of the spray solution | Spray solution concentration/ application dosage | Application dosage of sugi refined oil (ml/m²) | Herbicidal activity | | | | | |
|---|---|---|---|---|---|---|---|---|
| | | | Echinochloa utilis | Digitaria adscendens | Avena fatua | Amaranthus viridis | Chenopodium album | Ipomoea purpurea |
| Stock solution or solution diluted with water | | | | | | | | |
| 100 | 1% | 2 | 2 | 2 | 1 | 1 | 2 | 3 |
| 20 | 5% | 10 | 6 | 8 | 3 | 4 | 4 | 7 |
| 10 | 10% | 20 | 7 | 9 | 5 | 7 | 7 | 8 |
| 4 | 25% | 50 | 10 | 10 | 9 | 10 | 10 | 10 |
| 2 | 50% | 100 | 10 | 10 | 10 | 10 | 10 | 10 |
| 1 | 100% (stock solution) | 200 | 10 | 10 | 10 | 10 | 10 | 10 |

### Preparation Example 2:

· Using about 100 kg each of undried lumbers of Picea abies, Pseudotsuga menziesii (Mirbel) Franco, Larix kaempferi, Pinus sylvestris, Pinus elliottii or Pinus radiate, operations were performed in the same way as in Preparation Example 1 to obtain 120 g to 200 g of oily extracts derived from each of the lumbers. Hereinafter, each of the oily extracts is to be referred to as "PA-refined oil", "PM-refined oil", "LK-refined oil", "PS-refined oil", "PS-refined oil", "PE-refined oil" and "PR-refined oil". The recovery of the oily extract was performed by a method of allowing the condensed water obtained by cooling the steam generated during the drying step to stand for one week and bringing the oil layer generated on the surface of the condensed water into contact with an oil absorbent (ORSORB) (manufactured by COSMO ECO SUPPORT INC.).

### Test Example 4: Pot test on the foliar application (post-emergence treatment of weeds)

Using each of the oily extracts obtained in Preparation Example 2, a flowable (emulsion) formulation was prepared according to Preparation Example 2. The herbicidal activity in the post-emergence stage was evaluated by the method according to Test Example 3 except that the dilution ratio of the spray solution with water was fixed to 4-fold dilution. The results are shown in Table 5.

**Table 5 Pot test on the foliar application (post-emergence treatment of weeds)**

| Used essential oil | Herbicidal activity | | | | | |
|---|---|---|---|---|---|---|
| | Echinochloa utilis | Digitaria adscendens | Avena fatua | Amaranthus viridis | Chenopodium album | Ipomoea purpurea |
| 4-fold dilution of each of the oily extracts | | | | | | |
| PA refined oil | 10 | 10 | 10 | 10 | 10 | 10 |
| PM refined oil | 10 | 10 | 9 | 10 | 9 | 8 |
| LK refined oil | 10 | 10 | 9 | 10 | 9 | 9 |
| PS refined oil | 10 | 10 | 9 | 10 | 10 | 9 |
| PE refined oil | 10 | 10 | 10 | 10 | 10 | 10 |
| PR refined oil | 10 | 10 | 10 | 10 | 10 | 10 |

Application dosage of the essential oil per 1 m² is 50 ml.

### Formulation Example 3: Formulation containing inorganic components

6 parts by mass of sodium bicarbonate (NaHCO₃) and 84 parts by mass of water were added to 10 parts by mass of each of the oily extracts obtained in Preparation Examples 1 and 2 to thereby obtain a liquid formulation.

### Test Example 5: Pot test on the foliar application (post-emergence treatment of weeds)

Using the liquid formulation prepared in Formulation Example 3, the herbicidal activity in the post-emergence stage was evaluated by the method according to Test Example 3 except that the test was conducted under a fixed condition that the solution was used as a stock solution without being diluted with water. Also, a formulation using water as a substitute of an oily extract, i.e. a formulation containing sodium bicarbonate only was prepared for comparison, and its herbicidal effect was evaluated as a comparative example. The formulation was sprayed uniformly in a spray volume of 200 ml per 1 m². The results are shown in Table 6.

**Table 6 Pot test on the foliar application (post-emergence treatment of weeds)**

| Used essential oil | Herbicidal activity | | | | | |
|---|---|---|---|---|---|---|
| | Echinochloa utilis | Digitaria adscendens | Avena fatua | Amaranthus viridis | Chenopodium album | Ipomoea purpurea |
| Sugi essential oil + sodium bicarbonate | 10 | 10 | 9 | 9 | 9 | 9 |
| PA refined oil + sodium bicarbonate | 10 | 9 | 10 | 9 | 9 | 10 |
| PM refined oil + sodium bicarbonate | 9 | 9 | 8 | 9 | 9 | 9 |
| LK refined oil + sodium bicarbonate | 10 | 10 | 9 | 9 | 9 | 9 |
| PS refined oil + sodium bicarbonate | 9 | 10 | 8 | 9 | 9 | 9 |
| PE refined oil + sodium bicarbonate | 10 | 10 | 10 | 9 | 9 | 10 |
| PR refined oil + sodium bicarbonate | 10 | 10 | 9 | 8 | 8 | 9 |
| Comparative Example (sodium bicarbonate only) | 3 | 4 | 4 | 3 | 4 | 2 |
| Comparative Example (sugi refined oil only) | 7 | 9 | 5 | 7 | 7 | 8 |

Application dosage per 1 m²: 20 ml of the essential oil and 12 g of sodium bicarbonate.

### Formulation Example 4: Formulation containing inorganic components

To 10 parts by mass of each of the oily extracts obtained in Preparation Examples 1 and 2, 6 parts by mass of calcium borate (CaB₄O₇·nH₂O) powder having a mean volume diameter of 0.1 to 0.2 mm as a primary particle and 84 parts by mass of water were added and mixed to thereby obtain a liquid formulation.

### Test Example 6: Pot test on the foliar application (post-emergence treatment of weeds)

Using the liquid formulation prepared in Formulation Example 4, the herbicidal activity in the post-emergence treatment of weeds was evaluated by the method according to Test Example 3 except that the test was conducted under a fixed condition that the solution was used as a stock solution without being diluted with water. Also, a formulation using water as a substitute of an oily extract, i.e. a formulation containing calcium borate only was prepared for comparison, and its herbicidal effect was evaluated as a comparative example. The formulation was sprayed uniformly in a spray volume of 200 ml per 1 m². The results are shown in Table 7.

**Table 7 Pot test on the foliar application (post-emergence treatment of weeds)**

| Used essential oil | Herbicidal activity | | | | | |
|---|---|---|---|---|---|---|
| | Echinochloa utilis | Digitaria adscendens | Avena fatua | Amaranthus viridis | Chenopodium album | Ipomoea purpurea |
| Sugi essential oil + calcium borate | 10 | 10 | 9 | 10 | 10 | 10 |
| PA refined oil + calcium borate | 10 | 10 | 10 | 10 | 10 | 10 |
| PM refined oil + calcium borate | 9 | 10 | 9 | 9 | 10 | 9 |
| LK refined oil + calcium borate | 10 | 10 | 10 | 10 | 10 | 10 |
| PS refined oil + calcium borate | 9 | 10 | 9 | 10 | 10 | 10 |
| PE refined oil + calcium borate | 10 | 10 | 10 | 10 | 9 | 10 |
| PR refined oil + calcium borate | 10 | 10 | 9 | 9 | 10 | 10 |
| Comparative Example (calcium borate only) | 4 | 4 | 5 | 4 | 4 | 3 |
| Comparative Example (sugi refined oil only) | 7 | 9 | 5 | 7 | 7 | 8 |

Application dosage per 1 m²: 20 ml of the essential oil and 12 g of calcium borate

### Formulation Example 5: Formulation containing extracted components of the other plants

To 10 parts by mass of each of the oily extracts obtained in Preparation Examples 1 and 2, 10 parts by mass of d-limonene, 2 parts by mass of polyvinyl alcohol, 2 parts by mass of DEMOL N (trade name; manufactured by Kao Corporation), 0.2 parts by mass of ANTIFOAM E-20 (trade name; manufactured by Kao Corporation) and 75.8 parts by mass of water were added and mixed to thereby obtain a liquid formulation.

### Test Example 7: Pot test on the foliar application (post-emergence treatment of weeds)

Using the liquid formulation prepared in Formulation Example 5, the herbicidal activity in the post-emergence treatment of weeds was evaluated by the method according to Test Example 3 except that the test was conducted under a fixed condition that the solution was used as a stock solution without being diluted with water. Also, a formulation using water as a substitute of an oily extract, i.e. a formulation containing d-limonene only was prepared for comparison, and its herbicidal effect was evaluated as a comparative example. The formulation was sprayed uniformly in a spray volume of 200 ml per 1 m². The results are shown in Table 8.

**Table 8 Pot test on the foliar applicaiton (post-emergence treatment of weeds)**

| Used essential oil | Herbicidal activity | | | | | |
|---|---|---|---|---|---|---|
| | Echinochloa utilis | Digitaria adscendens | Avena fatua | Amaranthus viridis | Chenopodium album | Ipomoea purpurea |
| Sugi essential oil + d-limonene | 10 | 10 | 10 | 10 | 10 | 10 |
| PA refined oil + d-limonene | 10 | 10 | 10 | 10 | 10 | 10 |
| PM refined oil + d-limonene | 10 | 10 | 9 | 9 | 9 | 9 |
| LK refined oil + d-limonene | 10 | 10 | 9 | 10 | 10 | 9 |
| PS refined oil + d-limonene | 9 | 10 | 9 | 9 | 10 | 9 |
| PE refined oil + d-limonene | 10 | 10 | 10 | 10 | 10 | 10 |
| PR refined oil + d-limonene | 10 | 10 | 10 | 9 | 9 | 9 |
| Comparative Example (d-limonene only) | 5 | 7 | 5 | 6 | 6 | 4 |
| Comparative Example (sugi refined oil only) | 7 | 9 | 5 | 7 | 7 | 8 |

Application dosage per 1 m²: 20 ml of the essential oil and 20 ml of d-limonene

### Test Example 8: Selective weed control

In the outside habitat of Zoysia matrella in which Poa annua dominated as a weed, after a roller was impregnated with a liquid solution using the sugirefined oil prepared in Formulation Example 3, the liquid solution was applied in an amount of 40 g per 1 m² of the habitat while a rolling pressure was applied to the habitat under a load of about 5 kg on the brush. When the herbicidal effect was investigated ten days after the application, withered Poa annua was observed in the applied area. In addition, no injury such as growth inhibition on Zoysia matrella was found and a selective herbicidal effect was confirmed.

### Test Example 9: Pot test on foliar application (post-emergence treatment of weeds)

Using commercially available essential oils obtained from Tree of Life Co., Ltd., a comparison of the herbicidal effect was made between the oils. The four oils listed below were used as will hereinafter be discussed in detail.

### Cedarwood Virginia essential oil:

The essential oil is extracted from the lumber of Juniperus virginiana belonging to the family Cupressaceae by steam distillation. According to the disclosed information, major components having a content of 2% or more include thujopsene in 25.47%, cedrol in 23.83%, α-cedrene in 21.37%, β-cedrene and β-caryophyllene in 5.10% and widdrol in 2.93%. Accordingly, the essential oil has a high content of thujopsene and α-cedrene belonging to sesquiterpene and cedrol belonging to sesquiterpene alcohol and the total content of the three components is 70.67%. The essential oil corresponds to the oily extract used in the present invention hereinafter referred to as "essentialoil A".

### Cedarwood Atlas essential oil:

The essential oil is extracted from the lumber of Cedrus atlantica belonging to the family Cupressaceae by steam distillation. According to the disclosed information, major components having a content of 2% or more include β-himachalene in 46.72%, α-himachalene in 12.05% and aromadendrene in 17.57%. Accordingly, the essential oil has a high content of β-himachalene and α-himachalene belonging to sesquiterpene and the total content of the two components is 58.77%. The essential oil corresponds to the oily extract used in the present invention hereinafter referred to as "essentialoil B".

### Cypress essential oil:

The essential oil is extracted from leaves and branches of Cupressus sempervirens belonging to the family Cupressaceae by steam distillation. According to the disclosed information, major components having a content of 2% or more include α-pinene in 51.22%, 5-3-carene in 22.44%, limonene in 3.74% and terpinolene in 3.56%. Accordingly, the essential oil has a high content of components belonging to monoterpene. The essential oil does not correspond to the oily extract used in the present invention since it is not extracted from a lumber, and was used as a comparative example. Hereinafter the essential oil is referred to as "essential oil C".

### Eucalyptus globulus essential oil:

The essential oil is extracted from leaves and branches of Eucalyptus globulus belonging to the family Myrtaceae by steam distillation. According to the disclosed information, major components having a content of 2% or more include limonene and 1,8-cineole in 86.76%, γ-terpinene in 4.92% and p-cymen in 3.78%. The essential oil has a high content of the components belonging to monoterpene. The essential oil is derived from a plant which does not belong to the order Pinales and is not an extract from a lumber. Therefore the essential oil does not correspond to the oily extract used in the present invention and was used as a comparative example. Hereinafter the essential oil is referred to as "essential oil D".

Using these essential oils, a flowable (emulsion) formulation was prepared according to Formulation Example 2. The herbicidal activity in the post-emergence treatment of weeds was evaluated by the method according to Test Example 3 except that the dilution ratio of the spray solution with water was fixed to 2-fold dilution. The results are shown in Table 9.

**Table 9 Pot test on the foliar application (post-emergnece treatment of weeds)**

| Used essential oil | Herbicidal activity | | | | | |
|---|---|---|---|---|---|---|
| | Echinochloa utilis | Digitaria adscendens | Avena fatua | Amaranthus viridis | Chenopodium album | Ipomoea purpurea |
| 2-fold dilution of a flowable formulation containing 50% of each essential oil | | | | | | |
| Essential oil A | 10 | 10 | 9 | 10 | 10 | 10 |
| Essential oil B | 10 | 9 | 9 | 10 | 9 | 9 |
| Essential oil C (Comparative Example) | 3 | 4 | 3 | 2 | 3 | 2 |
| Essential oil D (Comparative Example) | 2 | 3 | 3 | 2 | 2 | 2 |

Application dosage of each essential oil per 1 m² is 50 ml.

As shown in Tables 2 to 9, the herbicidal composition used in the present invention enabled accurate and immediate control of the dominant weeds in a nonagricultural land within a broad range from the preemergence to post-emergence of the weeds. Particularly, with respect to a herbicidal performance in the foliar application to weeds, the herbicidal composition exhibits the efficacy the day after the treatment, and can be said to have properties comparable to that of chemical pesticides in respect of the capability of immediate effect of weed control.

Furthermore, the herbicidal composition also has an activity in the soil treatment, which suggests the capability of a long-term weed control when applied in the case where the weed emergence continues over a long period of time and the weed reemergence is accelerated in a bare ground after the ground cover plant died.

## Claims

1. A weed control method, comprising application of an oily extract obtained by cooling the steam generated during a drying step of a lumber of trees belonging to the order Pinales to a target weeds.

2. The weed control method as claimed in claim 1, wherein the trees belonging the order Pinales are the trees belonging to the family Cupressaceae or family Pinaceae.

3. The weed control method as claimed in claim 1, wherein the trees belonging the order Pinales are the trees belonging to the genus Cryptomeria, Thuja, Thujopsis, Chamaecyparis, Cupressus or Juniperus belonging to the family Cupressaceae; or to the genus Picea, Tsuga, Cedrus, Pseudotsuga, Larix, Pinus or Abies belonging to the family Pinaceae.

4. The weed control method as claimed in claim 1, wherein the trees belonging to the order Pinales is Cryptomeria japonica in the genus Cryptomeria in the family Cupressaceae.

5. The weed control method as claimed in claim 1, wherein a liquid formulation or spray solution containing an oily extract as an active ingredient in an amount of 1 to 100% is used by application to the foliar parts or roots of the target weeds, incorporation of the formulation or stock solution into the soil in pre-emergence of the target weeds and/or application to the soil surface in pre-emergence of the target weeds for the target weed control.

6. The weed control method as claimed in claim 5, wherein the oily extract of the active ingredient is a cedar essential oil obtained by cooling the steam generated during a drying step of the cedar wood.

## Patentansprüche

1. Unkrautbekämpfungsverfahren, das die Auftragung eines durch Kühlen des während einer Trocknungsstufe eines Holzes von Bäumen der Ordnung Pinales erzeugten Dampfes erhaltenen öligen Extrakts auf ein Zielunkraut umfasst.

2. Unkrautbekämpfungsverfahren nach Anspruch 1, wobei die Bäume der Ordnung Pinales Bäume der Familie Cupressaceae oder der Familie Pinaceae sind.

3. Unkrautbekämpfungsverfahren nach Anspruch 1, wobei die Bäume der Ordnung Pinales Bäume der Gattung Cryptomeria, Thuja, Thujopsis, Chamaecyparis, Cupressus oder Juniperus der Famile Cupressaceae; oder der Gattung Picea, Tsuga, Cedrus, Pseudotsuga, Larix, Pinus oder Abies der Familie Pinaceae sind.

4. Unkrautbekämpfungsverfahren nach Anspruch 1, wobei die Bäume der Ordnung Pinales Cryptomeria japonica in der Gattung Cryptomeria in der Familie Cupressaceae sind.

5. Unkrautbekämpfungsverfahren nach Anspruch 1, wobei eine flüssige Formulierung oder eine Sprühlösung, die einen öligen Extrakt als aktiven Bestandteil in einer Menge von 1 bis 100 % enthält, durch Auftragung auf die Blattteile oder die Wurzeln des Zielunkrauts, durch Einarbeiten der Formulierung oder der Stammlösung in den Boden vor dem Aussprießen des Zielunkrauts und/oder durch Auftragung auf die Bodenoberfläche vor dem Aussprießen des Zielunkrauts für die Zielunkrautbekämpfung verwendet wird.

6. Unkrautbekämpfungsverfahren nach Anspruch 5, wobei der ölige Extrakt des aktiven Bestandteils ein durch Kühlen des während einer Trockenstufe von Zedernholz erzeugten Dampfes erhaltenes ätherisches Zedernöl ist.

## Revendications

1. Procédé de lutte contre les mauvaises herbes comprenant l'application d'un extrait huileux obtenu par refroidissement de la vapeur formée pendant une étape de séchage d'une grume d'arbres appartenant à l'ordre des Pinales à une mauvaise herbe cible.

2. Procédé de lutte contre les mauvaises herbes selon la revendication 1, où les arbres appartenant à l'ordre des Pinales sont les arbres appartenant à la famille des Cupressaceae ou à la famille des Pinaceae.

3. Procédé de lutte contre les mauvaises herbes selon la revendication 1, où les arbres appartenant à l'ordre des Pinales sont les arbres appartenant au genre Cryptomeria, Thuja, Thujopsis, Chamaecyparis, Cupressus ou Juniperus appartenant à la famille des Cupressaceae ; ou au genre Picea, Tsuga, Cedrus, Pseudotsuga, Larix, Pinus ou Abies appartenant à la famille des Pinaceae.

4. Procédé de lutte contre les mauvaises herbes selon la revendication 1, où les arbres appartenant à l'ordre des Pinales sont Cryptomeria japonica dans le genre Cryptomeria dans la famille des Cupressaceae.

5. Procédé de lutte contre les mauvaises herbes selon la revendication 1, où une formulation liquide ou une solution pour spray contenant un extrait huileux comme ingrédient actif en une quantité de 1 à 100 % est utilisée par application aux parties foliaires ou aux racines des mauvaises herbes cibles, incorporation de la formulation ou de la solution de réserve dans le sol en pré-levée des mauvaises herbes cibles et/ou application à la surface du sol en pré-levée des mauvaises herbes cibles pour la lutte contre les mauvaises herbes cibles.

6. Procédé de lutte contre les mauvaises herbes selon la revendication 5, où l'extrait huileux de l'ingrédient actif est une huile essentielle de cèdre obtenue par refroidissement de la vapeur formée pendant une étape de séchage du bois de cèdre.
